# EUROPÄISCHE PATENTANMELDUNG

(11) **EP 1 645 653 A1**
(43) Veröffentlichungstag der Anmeldung: **12.04.2006**
(21) Anmeldenummer: 04023974.1
(22) Anmeldetag: 07.10.2004
(51) Int. Cl.: C23C 4/02, C23C 4/08, C23C 28/00, B23K 9/04

(54) **Schichtsystem**

(71) Anmelder: SIEMENS AKTIENGESELLSCHAFT, 80333 München (DE)
(72) Erfinder: Bostanjoglo, Georg, Dr., 12161 Berlin (DE); Cox, Nigel-Philip, 10119 Berlin (DE); Wilkenhöner, Rolf, Dr., 14532 Kleinmachnow (DE)

(57) **Zusammenfassung**

Schichtsysteme nach dem Stand der Technik weisen oft aufgrund ihrer Beschichtungsart nur eine geringe Anbindung an das Substrat auf. Bei mechanisch hochbelasteten Bauteilen kann es dann zu einer Ablösung der Schicht kommen.

Das erfindungsgemäße Schichtsystem (1) weist gesondert erzeugte Verankerungsmittel (10, 13) auf, die eine stärkere Anbindung an das Substrat (4) als die äußere Schicht (9) an das Substrat (4) aufweisen.

## Beschreibung

Die Erfindung betrifft ein Schichtsystem gemäß des Oberbegriffs des Anspruchs 1.

Bauteile für hohe Temperaturen werden heutzutage in der Regel mit Schutzschichten versehen.
Dies können metallische Korrosionsschutzschichten (MCrAlX-Schichten) oder keramische Wärmedämmschichten sowie Schichtsysteme mit metallischen Korrosionsschutzschichten und keramischen Wärmedämmschichten sein.
Als Beschichtungsverfahren für diese Beschichtungen benutzt man plasmagestützte Pulverspritzverfahren aufgrund ihrer vergleichsweise hohen Wirtschaftlichkeit.
Die Anbindung solcher Schichten an das Substrat erfolgt durch mechanische Verklammerung und anschließende Diffusionswärmebehandlung. Gelegentlich kann es in hochbelasteten Bereichen oder an ungünstigen, d.h. besonders an mechanisch hoch belasteten Stellen des Bauteils zu einer Ablösung der Schicht im Betrieb kommen. Das Abplatzen der Schicht während des Betriebs führt zur Schädigung des Grundwerkstoffs, so dass die Bauteillebensdauer wesentlich verringert ist.

Die US 5,869,798 offenbart ein Verfahren, bei dem mittels eines Schweißverfahrens Erhebungen auf einer Oberfläche erzeugt werden, wobei die Erhebung aus einem anderen Material besteht als das zu Grunde liegende Substrat.

Die EP 1 275 748 A2 offenbart Verankerungsmittel, die auf einer Oberfläche eines Substrats oder einer Zwischenschicht angeordnet sind bzw. durch mehrere Schichten hindurchragen.

Die DE 100 57 187 A1 offenbart Verankerungsmittel, die in ein metallisches Substrat hineinragen, um die Haftung eines nicht metallischen Materials wie Keramik auf dem metallischen Substrat zu verbessern. Die Verankerungsmittel erstrecken sich nicht bis zu einer äußeren Oberfläche.

Die EP 0 713 95,7 A1 offenbart ein Verfahren, bei der eine Vertiefung in einer Schicht mit Material aufgefüllt wird.

Weiterer Stand der Technik ist bekannt aus der DE 30 38 416 A1 sowie aus der Zeitschrift Journal of Materials Science 24 (1989), Seite 115 - 123 mit dem Titel "Enhanced metal-ceramic adhesion by sequential sputter deposition and pulsed laser melting of copper films on sapphire substrates" von A. J. Pedraza, M.J. Godbole.

Es ist daher Aufgabe der Erfindung ein Schichtsystem aufzuzeigen, das eine bessere Anbindung von einer Schutzschicht an ein Substrat und/oder von Schichten untereinander aufweist.

Die Aufgabe wird gelöst durch ein Schichtsystem gemäß des Anspruchs 1.

Das erfindungsgemäße Schichtsystem weist gesondert erzeugte Verankerungsmittel auf, die eine sehr starke Anbindung an das Substrat oder an eine unter ihr auf dem Substrat angeordnete Zwischenschicht aufweisen und auf andere Art und Weise als die Schicht an das Substrat oder an die andere Schicht angebunden sind.

In den Unteransprüchen sind weitere vorteilhafte Maßnahmen aufgelistet.
Die in den Unteransprüchen aufgelisteten Maßnahmen können in vorteilhafter Weise beliebig miteinander kombiniert werden.

Es zeigen
- Figur 1, 2, 6, 7, 8: Schichtsysteme,
- Figur 3: eine perspektivische Draufsicht auf ein Schichtsystem,
- Figur 4: Verfahrensschritte zur Herstellung eines Schichtsystems,
- Figur 5: Verfahrensschritte zur Herstellung eines Schichtsystems,
- Figur 9, 20, 21, 22: ein erfindungsgemäß ausgebildetes Schichtsystem,
- Figur 10 - 12: Verfahrensschritte zur Herstellung eines Schichtsystems,
- Figur 13, 14, 15: Verfahrensschritte zur Herstellung eines Schichtsystems,
- Figur 16, 17: Verfahrensschritte zur Herstellung eines Schichtsystems,
- Figur 18: eine Gasturbine
- Figur 19: eine Brennkammer und
- Figur 23: eine Turbinenschaufel.

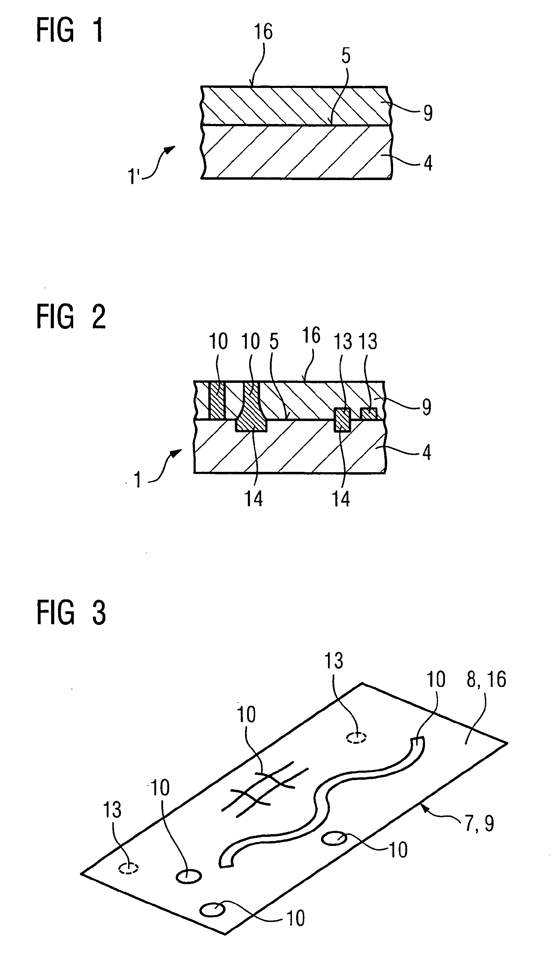

Figur 1 zeigt ein Schichtsystem 1' nach dem Stand der Technik.
Das Schichtsystem 1' weist ein Substrat 4 auf.
Auf der Substratoberfläche 5 des Substrats 4 ist zumindest eine äußere Schicht 9 vorhanden. Dies kann eine metallische und/oder keramische äußere Schicht 9 sein.

Die Anbindung der äußeren Schicht 9 auf dem Substrat 4 erfolgt nach dem bisherigen Stand der Technik allein durch mechanische Verklammerung (Oberflächenrauhigkeit) an die zugrunde Oberfläche und anschließende Diffusionswärmebehandlung.

Figur 2 zeigt ausgehend von Figur 1 ein Schichtsystem 1 mit durchgehenden Verankerungsmittel 10 oder inneren Verankerungsmitteln 13.

Das Substrat 4 kann metallisch oder keramisch sein und ist im Falle von Gasturbinenbauteilen insbesondere aus einer eisen-, nickel- oder kobaltbasierten Superlegierung hergestellt.

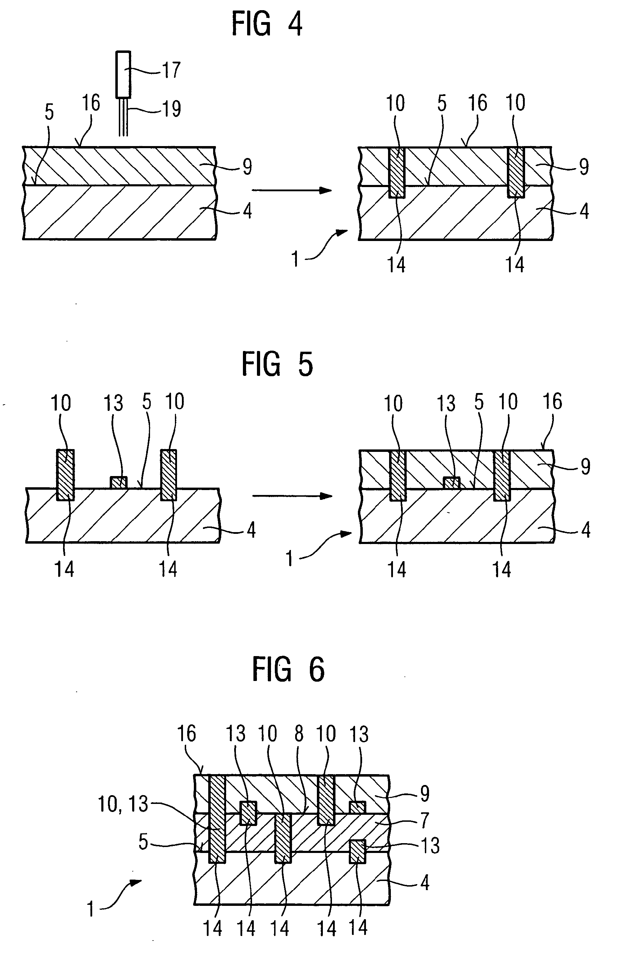

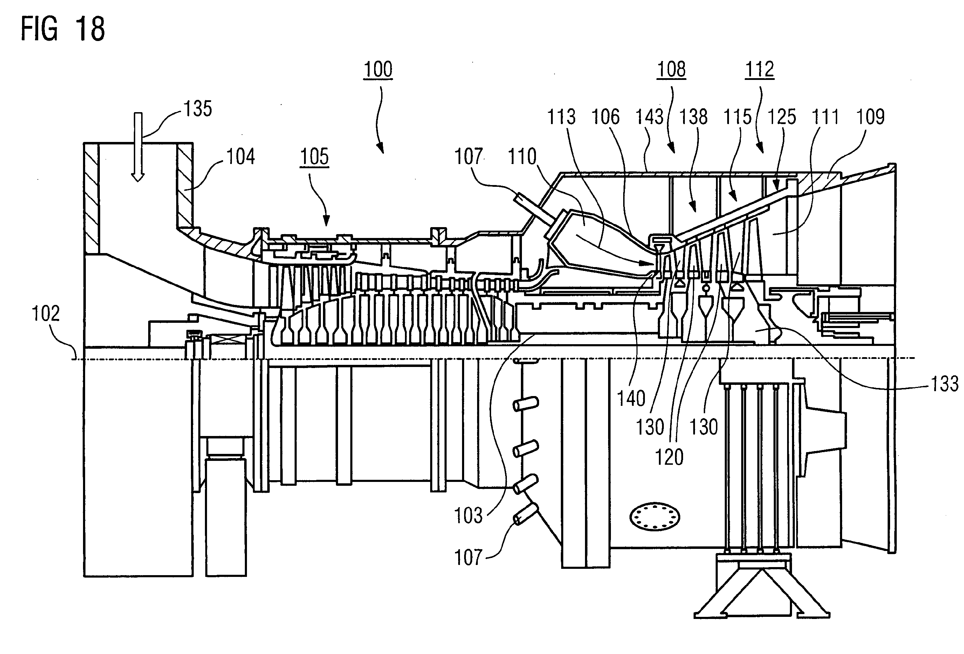

Für Turbinenschaufeln 120, 130 (Fig. 18) wird beispielsweise auf das Substrat 4 eine metallische Korrosionsschutzschicht 9 (Fig. 4, 5) des Typs MCrAlX aufgebracht, worauf dann beispielsweise noch zusätzlich eine äußere, beispielsweise eine keramische Wärmedämmschicht 9 (Fig. 6, 7, 8) aufgebracht wird, so dass die Korrosionsschutzschicht dann eine Zwischenschicht 7 ist.

In der äußeren Schicht 9 ist zumindest ein durchgehendes Verankerungsmittel 10 und/oder zumindest ein inneres Verankerungsmittel 13 vorhanden, die sich beispielsweise mit einem bestimmten Anteil 14 in das Substrat 4 hinein erstrecken.
Der Anteil 14, also eine Erstreckung des durchgehenden Verankerungsmittels 10 oder des inneren Verankerungsmittels 13 in das Substrat 4 stellt bezogen auf die Länge oder des Volumens des durchgehenden Verankerungsmittels 10 oder des inneren Verankerungsmittels 13 den geringeren Anteil dar, so dass das durchgehende Verankerungsmittel 10 oder das innere Verankerungsmittel 13 sich mit den größten Längen oder dem größten Volumenanteil in der äußeren Schicht 9 befindet.

Das Material der durchgehenden Verankerungsmittel 10 oder der inneren Verankerungsmittel 13 entspricht beispielsweise dem Material der äußeren Schicht 9, in der es zum größten Teil angeordnet ist.
Ist das durchgehende Verankerungsmittel 10 oder das innere Verankerungsmittel 13 größtenteils in der äußeren Schicht 9 angeordnet, so entspricht das Material des durchgehenden Verankerungsmittels 10 oder des inneren Verankerungsmittels 13 beispielsweise dem Material der äußeren Schicht 9.
Wenn sich also das durchgehende Verankerungsmittel 10 oder das innere Verankerungsmittel 13 größtenteils in der Zwischenschicht 7 befindet (Fig. 6, 7, 8), so entspricht das Material des durchgehenden Verankerungsmittels 10 oder des inneren Verankerungsmittels 13 beispielsweise dem Material der Zwischenschicht 7.
Die durchgehenden Verankerungsmittel 10 oder die inneren Verankerungsmittel 13 weisen insbesondere eine andere Art der Anbindung auf, insbesondere mit einer erhöhten Anbindungskraft (genauer: Kraft/pro Kontaktfläche) an das Substrat 4 oder an die Zwischenschicht 7 gegenüber der Art der Anbindung der Zwischenschicht 7 an das Substrat 4 bzw. der äußeren Schicht 9 an die Zwischenschicht 7.

Die durchgehenden Verankerungsmittel 10 oder die inneren Verankerungsmittel 13 werden beispielsweise durch einen geeignet geführten Laserschweißprozess schmelzmetallurgisch an das Substrat 4 angebunden.
Ebenso ist es vorstellbar, dass die äußere Schicht 9 an bestimmten Stellen durch Lasercladding (Laserpulverbeschichten) aufgebracht wird und so durchgehende Verankerungsmittel 10 oder innere Verankerungsmittel 13 bilden. Die durchgehenden Verankerungsmittel 10 oder innere Verankerungsmittel 13 können auch angegossen werden oder beim Gießen des Substrats 4 mit hergestellt werden.
Die durchgehenden Verankerungsmittel 10 oder inneren Verankerungsmittel 13 stellen Haftungsbrücken für die die durchgehenden Verankerungsmittel 10 oder inneren Verankerungsmittel 13 umgebende äußere Schicht 9 dar.
Die durchgehenden Verankerungsmittel 10 gehen von der Substratoberfläche 5 des Substrats 4 aus und erstrecken sich nur bis zur äußeren Oberfläche 16 der äußere Schicht 9 (ggf. aus dem Substrat 4 heraus, wenn ein Anteil 14 vorhanden ist).

Die inneren Verankerungsmittel 13 werden durch die äußere Schicht 9 abgedeckt, so dass die inneren Verankerungsmittel 13 sich nicht bis zur äußeren Oberfläche 16 der äußeren Schicht 9 erstrecken, also innerhalb der äußeren Schicht 9 endend angeordnet sind. Dabei erstrecken sie 13 sich über mindestens 10%, 20%, 30%, 40% oder mehr der Dicke der äußeren Schicht 9 in die äußere Schicht 9.

Entsprechendes gilt für das durchgehende Verankerungsmittel 10 oder innere Verankerungsmittel 13 in der Zwischenschicht 7.

Es können auch nur durchgehende Verankerungsmittel 10 oder nur innere Verankerungsmittel 13 in der äußeren Schichten 9 vorhanden sein.

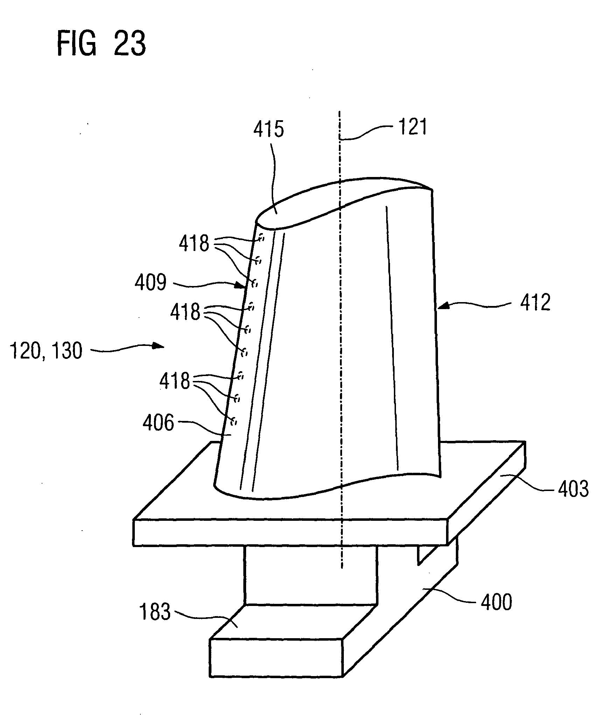

Die durchgehenden Verankerungsmittel 10 oder die inneren Verankerungsmittel 13 sind beispielsweise nur lokal, also örtlich begrenzt (Fig. 3) auf dem Substrat 4 oder der Zwischenschicht 7 vorhanden, nämlich dort, wo die mechanische Belastung am größten ist.
Dies ist beispielsweise der Bereich der Anströmkante 409 (Fig. 23) einer Turbinenschaufel 120, 130. Das restliche Schaufelblatt 406 (Fig. 23) würde dann keine durchgehenden Verankerungsmittel 10 oder inneren Verankerungsmittel 13 aufweisen.

Figur 3 zeigt eine Draufsicht auf eine Innenfläche 8 der Zwischenschicht 7 oder eine äußere Oberfläche 16 der äußeren Schicht 9.
Gestrichelt angedeutet sind die inneren Verankerungsmittel 13, die sich nicht bis zur Innenfläche 8 (Fig. 6) der Zwischenschicht 7 erstrecken.

Die durchgehenden Verankerungsmittel 10 oder die inneren Verankerungsmittel 13 können auf der Substratoberfläche 5 verschiedene Geometrien wie Kreise, Steppnähte (d.h. sie sind länglich und kreuzen sich), Wellenformen, Parallelbahnen sowie Kombinationen daraus aufweisen.

Figur 6 zeigt ein weiteres Schichtsystem 1.
Das Schichtsystem 1 besteht aus einem Substrat 4, einer Zwischenschicht 7 und einer äußeren Schicht 9.
Die Zwischenschicht 7 ist beispielsweise eine metallische MCrA1X-Schicht und die äußere Schicht 9 ist beispielsweise eine keramische Wärmedämmschicht 9 auf der Zwischenschicht 7.

Durchgehende Verankerungsmittel 10 oder innere Verankerungsmittel 13 sind sowohl in der Zwischenschicht 7 als auch in der äußeren Schicht 9 vorhanden.

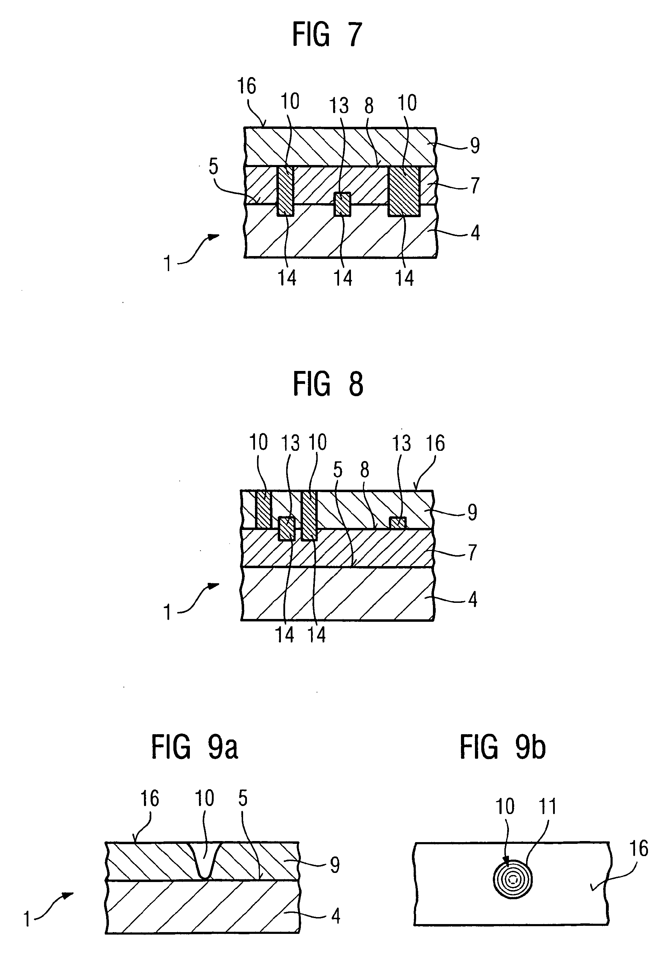

Die Zwischenschicht 7 muss aber keine durchgehenden Verankerungsmittel 10 oder inneren Verankerungsmittel 13 aufweisen (Fig. 8).
Ebenso können die Verankerungsmittel nur in der Zwischenschicht 7 vorhanden sein (Fig. 7).

Dabei können einige, aber auch alle durchgehenden Verankerungsmittel 10 oder inneren Verankerungsmittel 13 in der Zwischenschicht 7 und/oder der äußeren Schicht 9 einen Anteil 14 aufweisen, der sich in das Substrat 4 oder die Zwischenschicht 7 erstreckt.

Die durchgehenden Verankerungsmittel 10 in der Zwischenschicht 7 oder der äußeren Schicht 9 erstrecken sich ausgehend von der Substratoberfläche 5 des Substrats 4 bzw. von der Innenfläche 8 der Zwischenschicht 7 bis zu der Innenfläche 8 der Zwischenschichten 7, bzw. bis zur äußeren Oberfläche 16 der äußeren Schicht 9, aber nicht darüber hinaus oder sie 13 werden durch die Zwischenschicht 7 oder die äußere Schicht 9 abgedeckt, so dass die inneren Verankerungsmittel 13 sich nicht bis zur Innenfläche 8 der Zwischenschicht 7 oder der äußeren Oberfläche 16 der äußeren Schicht 9 erstrecken.

Die durchgehenden Verankerungsmittel 10 oder inneren Verankerungsmittel 13 in der Zwischenschicht 7 verbessern die Anbindung der Zwischenschicht 7 an das Substrat 4.
Das Material der durchgehenden Verankerungsmittel 10 der Zwischenschicht 7 kann beispielsweise auch so gewählt werden, dass sich eine verbesserte Haftung der äußeren Schicht 9 auf den Verankerungsmitteln 10 ergibt (Fig. 7).

Die Materialzusammensetzung der durchgehenden Verankerungsmittel 10 oder inneren Verankerungsmittel 13 in der Zwischenschicht 7 oder der äußeren Schicht 9, wird je nach Anforderung passend gewählt.

Das Material der durchgehenden Verankerungsmittel 10 oder inneren Verankerungsmittel 13 entspricht beispielsweise dem Material der Zwischenschicht 7 oder der äußeren Schicht 9, in der es zum größten Teil angeordnet ist.

Wenn sich also das durchgehende Verankerungsmittel 10 oder innere Verankerungsmittel 13 sich größtenteils in der Zwischenschicht 7 befindet, so entspricht das Material des durchgehenden Verankerungsmittels 10 oder des inneren Verankerungsmittels 13 beispielsweise dem Material der Zwischenschicht 7.
Ist das durchgehende Verankerungsmittel 10 oder das innere Verankerungsmittel 13 größtenteils in der äußeren Schicht 9 angeordnet, so entspricht das Material des durchgehenden Verankerungsmittels 10 oder des inneren Verankerungsmittels 13 beispielsweise dem Material der äußeren Schicht 9.

Die durchgehenden Verankerungsmittel 10 oder inneren Verankerungsmittel 13 sind insbesondere in thermisch und/oder mechanisch hoch belasteten Bereichen vorhanden.

Dies ist bei Turbinenschaufeln beispielsweise die Anströmkante 409, die Abströmkante 412 (Fig. 23) oder der Übergang zwischen Schaufelblatt 406 und Plattform 403 (Fig. 23).

Das Schichtsystem 1 ist beispielsweise ein Bauteil einer Gas-100 (Fig. 18) (auch Flugzeugturbine) oder Dampfturbine. Thermisch hoch belastete Bauteile der Turbinen weisen ein solches Schichtsystem auf, wie z.B. Turbinenschaufeln 120, 130, Hitzeschildelemente 155 einer Brennkammer 110 sowie weitere Gehäuseteile, die entlang des Strömungsweges eines heißen Dampfes oder Heißgases sich befinden.

Das Schichtsystem 1 kann auf ein neu hergestelltes Bauteil aufgebracht werden sowie auf Bauteile, die nach dem Einsatz wieder aufgearbeitet werden (Refurbishment). Dabei werden die Bauteile zuvor von degradierten Schichten befreit, Risse gegebenenfalls repariert und es erfolgt eine erneute Beschichtung des Substrats 4.

Die Figur 7 zeigt ein weiteres Ausführungsbeispiel eines Schichtsystems 1.
In diesem Schichtsystem 1 sind die durchgehenden Verankerungsmittel 10 oder inneren Verankerungsmittel 13 nur in der Zwischenschicht 7 vorhanden. Auf der Zwischenschicht 7 ist die äußere Schicht 9 vorhanden. Eine Kontaktfläche der durchgehenden Verankerungsmittel 10 an der Innenfläche 8 verbessert die Haftung der äußeren Schicht 9 gegenüber einer vergleichbaren Kontaktfläche mit der Zwischenschicht 7. Dies wird beispielsweise dadurch erreicht, dass die Kontaktflächen der durchgehenden Verankerungsmittel 10 an der Innenfläche 8 Keimpunkte, bspw. aus Aluminiumoxid, bilden für ein beispielsweise epitaktisches Aufwachsen einer äußeren Schicht 9 auf der Zwischenschicht 7.
Auch ohne Zwischenschicht 7 (Fig. 4, 5, rechts) wird ein verbessertes Schichtsystem 1 dadurch erreicht, dass die durchgehenden Verankerungsmittel 10 oder inneren Verankerungsmittel 13 zu einer verbesserten Anbindung der äußeren Schicht 9 an das Substrat 4 führen.

Dabei erstrecken sich nicht notwendigerweise einige, aber nicht unbedingt alle durchgehenden Verankerungsmittel 10 oder inneren Verankerungsmittel 13 in das Substrat 4 mit einem Anteil 14 hinein.

Figur 8 zeigt ein weiteres Ausführungsbeispiel eines Schichtsystems 1.
In diesem Ausführungsbeispiel sind die durchgehenden Verankerungsmittel 10 oder inneren Verankerungsmittel 13 nur in der äußeren Schicht 9 vorhanden.

Dabei erstrecken sich einige, aber nicht unbedingt alle durchgehenden Verankerungsmittel 10 oder inneren Verankerungsmittel 13 in das Substrat 4 oder in die Zwischenschicht 7 hinein.

Figur 4 zeigt beispielhaft Verfahrensschritte eines Verfahrens zur Herstellung eines Schichtsystems 1.
In einem ersten Schritt wird auf das Substrat 4 in bekannter Art und Weise die zumindest eine äußere Schicht 9 aufgebracht.

Die äußere Schicht 9 wird bspw. mit einem Laser 17 oder einer Elektronenstrahlkanone 17 behandelt, die einen entsprechenden Laser- oder Elektronenstrahl 19 aussendet. Durch diese Art der Behandlung wird das Material der äußeren Schicht 9 bis hin zur Substratoberfläche 5 des Substrats 4 oder darüber hinaus mit einem Anteil 14 in das Substrat 4 hinein, lokal umgewandelt, beispielsweise aufgeschmolzen, so dass sich eine schmelzmetallurgische Anbindung von Material aus der äußeren Schicht 9 in das Substrat 4 ergibt. Mit diesem Verfahren werden durchgehende Verankerungsmittel 10 erzeugt, die sich von der Substratoberfläche 5 bis hin zur äußeren Oberfläche 16 der äußeren Schicht 9 erstrecken.

Die Ausführungen für die äußere Schicht 9 (ohne Zwischenschicht 7) gelten analog für eine Zwischenschicht 7, auf die noch eine äußere Schicht 9 aufgebracht wird.

Figur 5 zeigt ein weiteres Herstellungsverfahren.
In einem ersten Schritt werden auf das Substrat 4 zuerst die durchgehenden Verankerungsmittel 10 oder inneren Verankerungsmittel 13 aufgebracht, also gesondert erzeugt. Dies kann auf verschiedene Art und Weise, wie etwa durch einen geeignet geführten Laserschweißprozess oder Lasercladding erfolgen.
Die durchgehenden Verankerungsmittel 10 oder inneren Verankerungsmittel 13 weisen insbesondere eine sehr starke, insbesondere schmelzmetallurgische Anbindung an das Substrat 4 auf.

Die durchgehenden Verankerungsmittel 10 oder inneren Verankerungsmittel 13 können aber auch bereits bei der Herstellung des Substrats 4 erzeugt worden sein, beispielsweise durch einen Gießprozess.

In einem nachfolgenden Prozess wird die äußere Schicht 9 aufgebracht, wobei die durchgehenden Verankerungsmittel 10 oder inneren Verankerungsmittel 13 von dem Material der äußeren Schicht 9 umschlossen werden und Haftungsbrücken für die Schicht 9 darstellen.

Das Material der durchgehenden Verankerungsmittel 10 oder inneren Verankerungsmittel 13 kann gleich dem Material der äußeren Schicht 9 oder gleich dem Material des Substrats 4 sein oder auch eine andere Materialzusammensetzung aufweisen.

Die Ausführungen für die äußere Schicht 9 (ohne Zwischenschicht 7) gelten analog für eine Zwischenschicht 7, auf die noch eine äußere Schicht 9 aufgebracht wird.

Figur 9a zeigt ein erfindungsgemäßes Bauteil 1 (Querschnitt durch ein durchgehendes Verankerungsmittel 10).
Das durchgehende Verankerungsmittel 10 weist an der äußeren Oberfläche 16 eine größere Querschnittsfläche 11 auf als an der unten liegenden Substratoberfläche 5 (Fig. 9b, Draufsicht auf Fig. 9a).

Die Form der durchgehenden Verankerungsmittel 10 im Querschnitt ist hier beispielsweise glockenförmig ausgebildet.
Die Querschnittskontur kann auch andere Formen aufweisen, wie z. B. einen parabelförmigen Verlauf, wobei die Parabel dann nach oben 16 (Fig. 9b) offen ist.

Der Querschnitt des durchgehenden Verankerungsmittels 10 ist hier beispielsweise rund ausgebildet (Fig. 9b). Andere Querschnitte sind möglich (oval).
Gestrichelt angedeutet ist die Querschnittsfläche des durchgehenden Verankerungsmittels 10 an der Substratoberfläche 5.

Das durchgehende Verankerungsmittel 10 kann sich hier ebenfalls bis in das Substrat 4 hinein erstrecken (nicht dargestellt).

Das Material der durchgehenden Verankerungsmittel 10 kann in der äußeren Schicht 9 beispielsweise dem Material des Substrats 4 (metallisch) entsprechen oder keramisch sein.

Insbesondere besteht das Material der äußeren Schicht 9 aus einer Legierung des Typs MCrAlX, wobei dann die Verankerungsmittel 10 ein Material aus einer Legierung des Typs MCrAlX aufweist, die dem der äußeren Schicht 9 entspricht oder modifiziert ist.

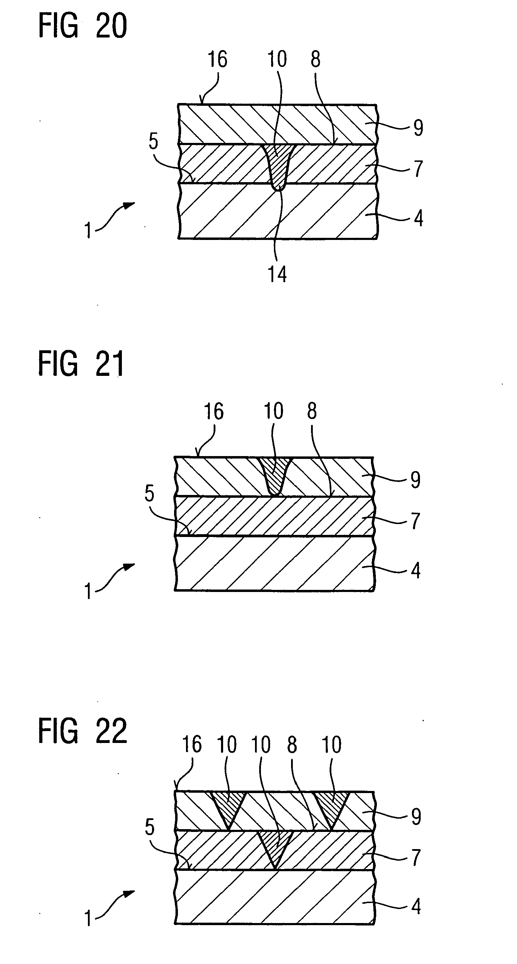

Figur 20 zeigt ein weiteres Ausführungsbeispiel eines erfindungsgemäßen Bauteils 1.
Das Schichtsystem 1 besteht aus einem Substrat 4, einer Zwischenschicht 7 und einer äußeren Schicht 9.
Das Substrat 4 ist beispielsweise eine Superlegierung und die Zwischenschicht 7 besteht aus einer Legierung des Typs MCrAlX, auf der dann eine äußere keramische Wärmedämmschicht 9 aufgebracht ist.
Ebenso, wie in Figur 9a dargestellt, sind hier nur in der Zwischenschicht 7 die durchgehenden Verankerungsmittel 10 ausgebildet.

In der Figur 21 ist das durchgehende Verankerungsmittel 10 nur in der äußeren Schicht 9 angeordnet.
In der Figur 22 sind die durchgehenden Verankerungsmittel 10 sowohl in der Zwischenschicht 7 als auch in der äußeren Schicht 9 angeordnet.

Darüber hinaus können in den Ausführungsbeispielen gemäß den Figuren 9, 20 bis 22 auch innere Verankerungsmittel 13 vorhanden sein.

Sollte die äußere Schicht 9 abplatzen oder eine lokale Schädigung im Bereich des durchgehenden Verankerungsmittels 10 aufweisen, so gewährleistet das durchgehende Verankerungsmittel 10, dass die Zwischenschicht 7 auf dem Substrat 4 verbleibt und das Substrat 4 weiterhin geschützt bleibt.

Das Material der durchgehenden Verankerungsmittel 10 kann auch so gewählt werden, dass es als Wachstumskeim, insbesondere beim epitaktischen Wachstum, beim Beschichten der Zwischenschicht 7 mit dem Material der äußeren Schicht 9, beispielsweise ein keramisches Material, dient.
Insbesondere besteht das Material der Zwischenschicht 7 aus einer Legierung des Typs MCrAlX, wobei dann die Verankerungsmittel 10 ebenfalls aus einer Legierung des Typs MCrAlX bestehen, die gegebenenfalls gegenüber der Zusammensetzung der Zwischenschicht 7 modifiziert ist.

Insbesondere entspricht die Materialklasse der durchgehenden Verankerungsmittel 10 oder inneren Verankerungsmittel 13 der Materialklasse der Zwischenschicht 7 oder der äußeren Schicht 9, in der es angeordnet ist: Metall oder Keramik.

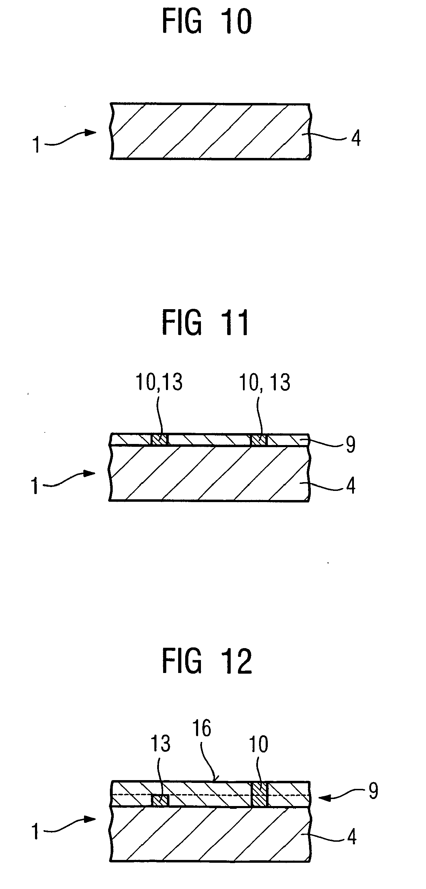

Die Figuren 10 bis 12 zeigen ein Verfahren zur Herstellung des Schichtsystems 1.

Die äußere Schicht 9 und die durchgehenden Verankerungsmittel 10 oder inneren Verankerungsmittel 13 werden beispielsweise schichtweise hergestellt, d.h. die äußere Schicht 9 wird erzeugt und danach oder gleichzeitig die durchgehenden Verankerungsmittel 10 oder inneren Verankerungsmittel 13. Keinesfalls werden zuerst die Verankerungsmittel zumindest größtenteils oder ganz erzeugt (Fig. 5) und dann die Schicht oder umgekehrt (Fig. 4).

So wird ausgehend von dem Substrat 4, das noch keine äußere Schicht 9 aufweist, schichtweise Material für die äußere Schicht 9 aufgetragen und ebenso schichtweise werden die durchgehenden Verankerungsmittel 10 oder inneren Verankerungsmittel 13 erzeugt.
Je nachdem, ob durchgehende Verankerungsmittel 10 oder innere Verankerungsmittel 13 erzeugt werden sollen, wird an den Stellen, wo ein durchgehendes Verankerungsmittel 10 oder inneres Verankerungsmittel 13 ausgebildet sein soll, die Stelle beispielsweise mittels eines Lasers erwärmt und aufgeschmolzen, d.h. die Temperatur wird temporär und lokal erhöht.

Soll ein inneres Verankerungsmittel 13 erzeugt werden (Fig. 11), das sich nicht bis zur äußeren Oberfläche 16 der Schicht 9 erstrecken soll, so wird ab einer bestimmten Höhe die äußere Schicht 9 nicht mehr lokal aufgeschmolzen (Figur 12).

Die Ausführungen für die äußere Schicht 9 (ohne Zwischenschicht 7) gelten analog für eine Zwischenschicht 7, auf die noch eine äußere Schicht 9 aufgebracht wird.

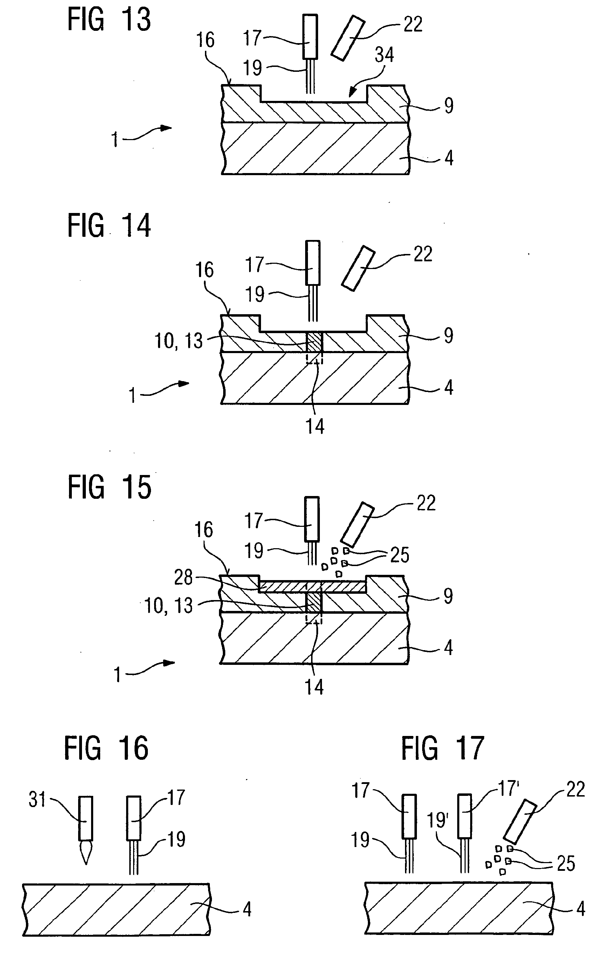

Die Figuren 13 bis 15 zeigen ein weiteres Herstellungsverfahren.

Hier ist auf dem Substrat 4 schon eine äußere Schicht 9 vorhanden. Dies ist insbesondere der Fall, wenn es sich um ein zu reparierendes Bauteil 1 handelt, das beispielsweise im Einsatz war und insbesondere eine lokale Beschädigung in Form einer Vertiefung 34 aufweist.

Diese Vertiefung 34 ist beispielsweise geschwächt oder war im Einsatz erhöhten Anforderungen ausgesetzt und wird in einem ersten Schritt beispielsweise mittels eines Lasers 17 (oder Elektronenstrahlkanone) und seiner Laserstrahlen 19 behandelt (Figur 13), so dass sich durchgehende Verankerungsmittel 10 oder innere Verankerungsmittel 13 bilden (Figur 14).

In einem weiteren Verfahrensschritt wird die Vertiefung 34 mit Schichtmaterial 25 aus einem Materialförderer 22 (bspw. Pulverförderer) aufgefüllt (beispielsweise durch Laserauftragsschweißen), wobei entweder nur Schichtmaterial 25 aufgefüllt wird, ohne dass das innere Verankerungsmittel 13 gemäß Figur 14 weiter ausgebildet wird, so dass ein inneres Verankerungsmittel 13 entsteht, das sich nicht bis zur äußeren Oberfläche 16 erstreckt oder beispielsweise der Laser 17 für das Laserauftragsschweißen wird beispielsweise ebenfalls benutzt, um das durchgehende Verankerungsmittel 10 gemäß Figur 14 bis zur äußeren Oberfläche 16 wachsen zu lassen.

Das durchgehende Verankerungsmittel 10 oder innere Verankerungsmittel 13 kann sich, muss aber nicht ebenfalls mit einem Anteil 14 (gestrichelt angedeutet) in das Substrat 4 erstrecken bzw. eine Form gemäß Figur 9 aufweisen.

Das Schichtmaterial 25 kann Material der äußeren Schicht 9 oder des Substrats 4 sein, aber auch eine andere Zusammensetzung aufweisen.
Ebenso kann in der Vertiefung 34 lokal keine äußere Schicht 9 vorhanden sein und es wird Material beispielsweise der äußeren Schicht 9 aufgetragen und durchgehende Verankerungsmittel 10 oder innere Verankerungsmittel 13 erzeugt.

Die Ausführungen für die äußere Schicht 9 (ohne Zwischenschicht 7) gelten analog für eine Zwischenschicht 7, auf die noch.eine äußere Schicht 9 aufgebracht wird.

Figur 16, 17 zeigen ein weiteres Ausführungsbeispiel eines Verfahrens zur Herstellung eines Schichtsystems 1.

Zur Herstellung der äußeren Schicht 9 wird beispielsweise ein Plasmabrenner 31 (Figur 16) verwendet.

Mittels eines Lasers 17 und seiner Laserstrahlen 19 wird dabei beispielsweise gleichzeitig, beispielsweise durch Aufschmelzen ein durchgehendes Verankerungsmittel 10 oder inneres Verankerungsmittel 13 erzeugt, in dem zumindest zeitweise an den für das durchgehende Verankerungsmittel 10 oder innere Verankerungsmittel 13 vorgegebenen Stellen das Material mittels des Lasers 17 behandelt, also beispielsweise aufgeschmolzen wird.

Ebenso können zwei Laser 17, 17' (Fig. 17) verwendet werden, wobei ein Laser 17' für das Auftragsverfahren verwendet wird, beispielsweise Laserauftragsschweißen unter Zuhilfenahme eines Materialförderers 22, der das Schichtmaterial 25 liefert, und ein Laser 17, der wie in Figur 16 die durchgehenden Verankerungsmittel 10 oder inneren Verankerungsmittel 13 erzeugt.

Die Ausführungen für die äußere Schicht 9 (ohne Zwischenschicht 7) gelten analog für eine Zwischenschicht 7, auf die noch eine äußere Schicht 9 aufgebracht wird.

In den Figuren 13, 14, 15, sowie 16, 17 können die Zwischenschicht 7 oder die äußere Schicht 9 und die durchgehenden Verankerungsmittel 10 oder inneren Verankerungsmittel 13 schichtweise erzeugt werden.

Anstelle der Laser 17, 17' oder Plasmabrenner 31 können auch Elektronenstrahlkanonen verwendet werden. Die Verwendung von Lasern, Plasmabrennern ist nicht beschränkt auf die Ausführungsformen auf durchgehende Verankerungsmittel 10 oder innere Verankerungsmittel 13, die sich mit einem Anteil 14 in das Substrat 4 oder in die Zwischenschicht 7 erstrecken bzw. auf eine spezielle Querschnittsform wie in Fig. 9.

Die Figur 18 zeigt eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109. Die Ringbrennkammer 106 kommuniziert mit einem beispielsweise ringförmigen Heißgaskanal 111. Dort bilden beispielsweise vier hintereinander geschaltete Turbinenstufen 112 die Turbine 108. Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei am Stator 143 befestigt, wohingegen die Laufschaufeln 120 einer Reihe 125 mittels einer Turbinenscheibe 133 am Rotor 103 angebracht sind. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet. Um den dort herrschenden Temperaturen standzuhalten, werden diese mittels eines Kühlmittels gekühlt. Ebenso können die Schaufeln 120, 130 Beschichtungen gegen Korrosion (MCrAlX ; M = Fe, Co, Ni, X=Y, Seltenen Erden) und Wärme (Wärmedämmschicht, beispielsweise ZrO₂, Y₂O₄-ZrO₂) aufweisen.

Die Leitschaufel 130 weist einen dem Innengehäuse 138 der Turbine 108 zugewandten Leitschaufelfuß (hier nicht dargestellt) und einen dem Leitschaufelfuß gegenüberliegendem Leitschaufelkopf auf. Der Leitschaufelkopf ist dem Rotor 103 zugewandt und an einem Befestigungsring 140 des Stators 143 festgelegt.

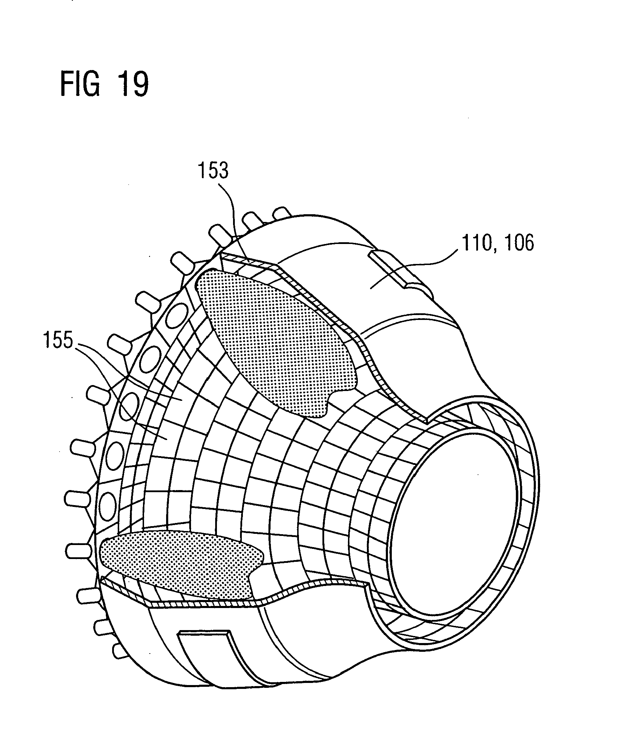

Die Figur 19 zeigt eine Brennkammer 110 einer Gasturbine 100. Die Brennkammer 110 ist beispielsweise als so genannte Ringbrennkammer ausgestaltet, bei der eine Vielzahl von in Umfangsrichtung um die Turbinenwelle 103 herum angeordneten Brennern 107 in einen gemeinsamen Brennkammerraum münden. Dazu ist die Brennkammer 110 in ihrer Gesamtheit als ringförmige Struktur ausgestaltet, die um die Turbinenwelle 103 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen. Jedes Hitzeschildelement 155 ist arbeitsmediumsseitig mit einer besonders hitzebeständigen Schutzschicht ausgestattet oder aus hochtemperaturbeständigem Material gefertigt. Aufgrund der hohen Temperaturen im Inneren der Brennkammer 110 ist zudem für die Hitzeschildelemente 155 bzw. für deren Halteelemente ein Kühlsystem vorgesehen.

Figur 23 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Schichtsystem (1),
zumindest bestehend aus einem Substrat (4) und
einer äußeren Schicht (9) auf dem Substrat (4), insbesondere mit zumindest einer Zwischenschicht (7) zwischen Substrat (4) und äußerer Schicht (9),
wobei in der äußeren Schicht (9) und/oder in der Zwischenschicht (7) Verankerungsmittel vorhanden sind,
wobei
das Substrat (4) eine Substratoberfläche (5),
die Zwischenschicht (7) eine Innenfläche (8),
die von der Substratoberfläche (5) des Substrats (4) beabstandet ist,
die äußere Schicht (9) eine äußere Oberfläche (16),
die von der Innenfläche (8) der Zwischenschicht (7) oder der Substratoberfläche (5) des Substrats (4) beabstandet ist,
aufweisen,
**dadurch gekennzeichnet,**
**dass** die Querschnittsfläche eines durchgehenden Verankerungsmittels (10) an der äußeren Oberfläche (16) größer ausgebildet ist als an der unterliegenden Substratoberfläche (5) des Substrats (3) oder an der unterliegenden Innenfläche (8) der Zwischenschicht (7) oder
**dass** die Querschnittsfläche eines durchgehenden Verankerungsmittels (10) an der Innenfläche (8) der Zwischenschicht (7) größer ausgebildet ist als an der unterliegenden Substratoberfläche (5) des Substrats (4).

2. Schichtsystem nach Anspruch 1,
**dadurch gekennzeichnet, dass**
das Schichtsystem (1) eine Zwischenschicht (7), insbesondere des Typs MCrAlX, aufweist.

3. Schichtsystem nach Anspruch 1 oder 2,
**dadurch gekennzeichnet, dass**
nur in der Zwischenschicht (7) die durchgehenden Verankerungsmittel (10) oder die inneren Verankerungsmittel (13) vorhanden sind.

4. Schichtsystem nach Anspruch 1 oder 2,
**dadurch gekennzeichnet, dass**
in der Zwischenschicht (7) und in der äußeren Schicht (9) die durchgehenden Verankerungsmittel (10) oder die inneren Verankerungsmittel (13) vorhanden sind.

5. Schichtsystem nach Anspruch 1 oder 2,
**dadurch gekennzeichnet, dass**
nur in der äußeren Schicht (9) die durchgehenden Verankerungsmittel (10) oder die inneren Verankerungsmittel (13)) vorhanden sind.

6. Schichtsystem nach Anspruch 1,
**dadurch gekennzeichnet, dass**
die durchgehenden Verankerungsmittel (10) oder die inneren Verankerungsmittel (13) eine andere Anbindungsart an das Substrat (4) oder an die Zwischenschicht (7) aufweisen als die äußere Schicht (9) an die Zwischenschicht (7) oder an das Substrat (4) oder die Zwischenschicht (7) an das Substrat (4).

7. Schichtsystem nach Anspruch 1 oder 6,
**dadurch gekennzeichnet, dass**
die durchgehenden Verankerungsmittel (10) oder die inneren Verankerungsmittel (13) schmelzmetallurgisch mit dem Substrat (4) und/oder der Zwischenschicht (7) verbunden sind.

8. Schichtsystem nach Anspruch 1, 2, 3, 4 oder 5,
**dadurch gekennzeichnet, dass**
die durchgehenden Verankerungsmittel (10) sich nur bis zur Innenfläche (8) der Zwischenschicht (7) oder nur bis zur äußeren Oberfläche (16) der äußeren Schicht (9) erstrecken,
in der sie (10) mit dem größten Volumenanteil angeordnet sind.

9. Schichtsystem nach Anspruch 1, 2, 3, 4 oder 5,
**dadurch gekennzeichnet, dass**
die inneren Verankerungsmittel (13) sich nur innerhalb der Zwischenschicht (7) oder der äußeren Schicht (9) erstrecken,
insbesondere über mindestens 10% der Dicke der Zwischenschicht (7) oder der äußeren Schicht (9).

10. Schichtsystem nach einem oder mehreren der vorherigen Ansprüche,
**dadurch gekennzeichnet, dass**
das Material der durchgehenden Verankerungsmittel (10) oder der inneren Verankerungsmittel (13) in der Zwischenschicht (7) oder in der äußeren Schicht (9) dem Material der jeweiligen Zwischenschicht (7) oder der äußeren Schicht (9) entspricht.

11. Schichtsystem nach einem oder mehreren der vorherigen Ansprüche,
**dadurch gekennzeichnet, dass**
das Material der durchgehenden Verankerungsmittel (10) oder der inneren Verankerungsmittel (13) verschieden von dem Material der Zwischenschicht (7) oder der äußeren Schicht (9) ist.

12. Schichtsystem nach einem oder mehreren der vorherigen Ansprüche,
**dadurch gekennzeichnet, dass**
die durchgehenden Verankerungsmittel (10) oder die inneren Verankerungsmittel (13) lokal begrenzt auf dem Substrat (4) oder der Zwischenschicht (7) vorhanden sind.

13. Schichtsystem nach Anspruch 1, 8, 9 oder 12,
**dadurch gekennzeichnet, dass**
die durchgehenden Verankerungsmittel (10) oder die inneren Verankerungsmittel (13) säulenartig ausgebildet sind.

14. Schichtsystem nach Anspruch 1,
**dadurch gekennzeichnet, dass**
das Schichtsystem (1) ein neu hergestelltes oder wieder aufgearbeitetes Bauteil einer Strömungsmaschine bzw. Turbine ,
insbesondere einer Gas- (100) oder Dampfturbine ist, insbesondere eine Turbinenschaufel (120, 130), ein Hitzeschildelement (155) oder ein Gehäuseteil entlang des Strömungsweges eines Heißgases.
